# EUROPÄISCHE PATENTSCHRIFT

(11) **EP 1 181 171 B1**
(45) Veröffentlichungstag und Bekanntmachung des Hinweises auf die Patenterteilung: **03.09.2003**
(21) Anmeldenummer: 00941958.1
(22) Anmeldetag: 18.05.2000
(51) Int. Cl.: B60R 21/01, B60R 21/20, B60R 21/24, B60R 21/26

(54) **AIRBAGEINRICHTUNG FÜR EIN KRAFTFAHRZEUG**
AIRBAG DEVICE FOR A MOTOR VEHICLE
SYSTEME D'AIRBAG POUR UN VEHICULE AUTOMOBILE

(30) Priorität: 21.05.1999 DE 19923482; 29.10.1999 DE 19952231
(43) Veröffentlichungstag der Anmeldung: 27.02.2002
(73) Patentinhaber: Volkswagen Aktiengesellschaft, 38436 Wolfsburg (DE)
(72) Erfinder: WOHLLEBE, Thomas, D-38110 Braunschweig (DE); SINNHUBER, Ruprecht, D-38518 Gifhorn (DE)
(74) Vertreter: Liebl, Thomas, Dipl.-Ing.
(86) Internationale Anmeldenummer: EP0004484
(87) Internationale Veröffentlichungsnummer: WO00071389

(56) Entgegenhaltungen:
- EP-A- 0 812 741
- EP-A- 0 836 971
- WO-A-99/65737
- DE-A- 19 816 075
- DE-U- 29 721 643
- US-A- 5 899 488
- JOST K: "AIR BAG KNEE BOLSTER" AUTOMOTIVE ENGINEERING,US,SOCIETY OF AUTOMOTIVE ENGINEERS. WARRENDALE, Bd. 104, Nr. 4, 1. April 1996 (1996-04-01), Seite 80 XP000583612 ISSN: 0098-2571

## Beschreibung

Die Erfindung betrifft eine Airbag-Einrichtung für ein Kraftfahrzeug nach dem Oberbegriff des Anspruchs 1. Eine derartige Airbag-Einrichtung ist, zum Beispiel, aus der schriften EP-A-0 812 717. EP-A-0 836 971 bekannt.

Airbageinrichtungen für Kraftfahrzeuge mit einem oder mehreren Airbags in den verschiedensten Ausführungsformen und für die verschiedensten Zwecke sind bekannt. Bestandteil dieser Einrichtungen können Sensorsysteme sein, die zum Auslösen der Entfaltung des oder der Airbags die Sitzposition des zu schützenden Insassen in Relation zum jeweiligen Airbag messen und aus dem Ergebnis dieser Messungen den Zeitpunkt und den Umfang der Airbagentfaltung ableiten. Die DE 44 20 114 A1 hat eine Airbag-Einrichtung für den Front- und Seitenschutz zum Gegenstand, bei der als Auslösegerät eine Steuerelektronik angeordnet ist, die die Richtung und die Intensität eines Aufpralles, aber auch die Sitzbelegung erfaßt und die in Abhängigkeit von den Signalen die Airbags einzeln oder in Kombination auslöst.

Es ist auch bekannt, Druckentlastungsventile einzusetzen, die mit einer Sitzbelegungssensorik über eine Steuereinrichtung in Wirkverbindung stehen, um den Gasstrom für den Airbag in Abhängigkeit von der Sitzposition eines Fahrzeuginsassen zu steuern, insbesondere zu verringern, wenn sich der Fahrzeuginsasse bei einem Aufprall nicht in seiner vorbestimmten Sitzposition, sondern in vorgebeugter Position (out-of-position) befindet oder ein Kinderrückhaltesystem auf dem betreffenden Fahrzeugsitz angeordnet ist oder sich gar ein Kind in der Entfaltungszone (keep-out-Zone) des Airbag aufhält, damit der Airbag nicht mit vollem Gasdruck auf den Fahrzeuginsassen wirkt. Des weiteren ist es bekannt, Stufengeneratoren zur Steuerung des Gasmassenstromes in einen Airbag und damit des Gasdruckes in diesem einzusetzen.

So ist aus der EP 0 836 971 A1 eine Insassenschutzvorrichtung für ein Fahrzeug mit wenigstens einem durch eine Aufblaseinrichtung füllbaren Airbag bekannt, die eine mit einer Steuereinrichtung verbundene Sensorik zur Auslösung und Beeinflussung der Aufblaseinrichtung hinsichtlich der Füllcharakteristik des Airbags aufweist, wobei zur Erkennung von Insassen in einer out-of-position-Haltung verschiedenste Elemente als Bestandteil der Sensorik vorgesehen sind, durch die das Ausbreitungsverhalten eines vorgegebenen Hüllenabschnitts des Airbags erfasst werden kann. Die von diesen Elementen erzeugten Signale sind dann in der Steuereinrichtung zur Beeinflussung der Aufblaseinrichtung verarbeitbar. Die Elemente können dabei durch ein mit dem Hüllenabschnitt verbundenes Zugglied nach Art eines Seiles, Bandes oder Schlauches ausgebildet sein, dem ein Wegaufnehmer nach Art eines Tachometers zugeordnet ist. Ferner können dem Zugglied auch magnetisch wirksame Metallpartikeln zugeordnet sein, wobei der Wegaufnehmer hier dann zur Erfassung magnetischer Unsymmetrien hergerichtet ist. Des Weiteren kann dem Zugglied ein Streifenmuster zugeordnet sein, dem ein optischer Sensor zur Erfassung des Ausbreitungsverhaltens des Streifenmusters zugeordnet ist. Die Elemente können weiter auch gebildet sein durch eine Drucksensorfolie oder ein Piezoelement, die jeweils über ein Signalübertragungsglied mit der Steuereinrichtung verbunden werden müssen. Außerdem können die Elemente auch durch einen Falt- oder Dehnkörper gebildet sein, der mit einem ersten Ende an dem vorgegebenen Hüllenabschnitt und mit einem zweiten Ende an einem ortsfesten Bauteil befestigt ist, wobei der Falt- oder Dehnkörper in einer Ruhestellung eine verkürzte Ausdehnung aufweist und durch die Aufblaseinrichtung in seiner Ausdehnung verlängerbar ist. Zusätzlich können diese Elemente hier wenigstens ein Reißelement umfassen, das mit einem ersten Ende auf dem Falt- oder Dehnkörper im Bereich eines vorgegebenen Halteabschnitts und mit einem zweiten Ende an einem ortsfesten Bauteil des Fahrzeugs befestigt ist, wobei das Reißelement z. B. durch die Wirkung der Aufblaseinrichtung zur Signalerzeugung zerreißbar ist. Durch dieses Zerreißen des Reißelements ist eine elektrische Leitung zur Gewinnung eines Schaltsignals unterbrechbar, wobei z. B. über ein Kennfeld der Steuereinrichtung ein Steuersignal zur Veränderung der Füllcharakteristik des Airbags erzeugbar ist, wenn das Signal nach der Auslösung der Aufblaseinrichtung nicht innerhalb der vorgegebenen Zeitspanne erfasst wird. Die Ansteuerung des Gasgenerators erfolgt hier somit in allen Fällen elektronisch in Abhängigkeit von einer gemessenen Ausbreitungscharakteristik des Airbags.

Ein ähnlicher Aufbau ist auch aus der EP 0 812 741 A1 bekannt. Dort ist eine Airbagvorrichtung beschrieben, bei welcher die von einer Fülleinrichtung in einen Airbag gelieferte Gasmenge durch einen ungehinderten Vorschub des Airbags in den eines im Airbaginneren angeordneten Bandes als Abtastmedium erfolgen. Dieses Band ist mit dem Vorderteil des Airbags verbunden und zudem so ausgebildet, dass es die Vorschubbewegung des Airbags mit ausführt. Eine Abtastung erfolgt hier im Hinblick auf die Vorschublänge und/oder Vorschubzeit, wobei eine Auswerteeinrichtung vorgesehen ist, die die Vorschubgeschwindigkeit des Bandes und damit des sich im Fahrgastraum bewegenden Gaskissens feststellt und über ein entsprechendes Steuersignal die Füllcharakteristik des Gasgenerators vorgibt. Es handelt sich somit auch hier um einen Aufbau einer Airbageinrichtung, bei der über eine Auswerte- und Steuereinrichtung ein Gasgenerator entsprechend angesteuert werden kann.

Ein ähnlicher Aufbau ist auch aus der im Prioritätsintervall veröffentlichten WO 99/65737 bekannt.

Bei den oben beschriebenen Airbageinrichtungen handelt es sich somit jeweils um Systeme, bei denen der aus dem Gasgenerator in den Airbag eingeblasene Gasstrom elektronisch gesteuert wird über entsprechend am Airbag angebrachte Mittel zur Messung und Erfassung des Ausbreitungsverhaltens des Airbags. Ein derartiger Aufbau ist relativ aufwendig und kann zudem unter Umständen auch eine gewisse Störanfälligkeit aufweisen.

Zudem ist aus der im Prioritätsintervall veröffentlichten DE 19816 075 A1 eine Sicherheitsvorrichtung für ein Kraftfahrzeug mit einem Mehrkammerairbag bekannt, der einen mit wenig Energie schnell aufblasbaren Tastairbag mit Tastfunktion aufweist, der in den Aufblasbereich wenigstens einer weiteren Airbagkammer aufblasbar ist und dort ein möglicherweise in diesem Bereich vorhandenes Hindernis außerhalb einer Normalposition ertastet. Mit dem Tastairbag ist eine elektronische Tasterkennungsvorrichtung verbunden, die beim Auftreffen des Tastairbags ein Steuersignal abgibt. Der Gasgenerator umfasst zudem eine Steuereinrichtung für die einströmende Gasmenge, die mit der Tasterkennung verbunden ist und die bei der Beaufschlagung mit dem Steuersignal eine weitere Aufblasfunktion des Gasgenerators für den Airbag unterbindet und wenigstens reduziert. Auch hier wird somit wiederum die vom Gasgenerator abgegebene Gasmenge elektronisch geregelt.

Aus der US 5,899,488 ist ein Aufbau bekannt, bei dem der Gasgenerator zum Öffnen der Abdeckung vor der Entfaltung des Airbags zuerst in eine dem Gasgenerator auf der abdeckungsfernen Seite zugeordnete Kappe oder Wanne eines verlagerbaren Bauteils einbläst, wobei dieses verlagerbare Bauteil über eine Mechanik mit den Abdeckklappen der Airbagabdeckung gekoppelt ist. Durch dieses Einblasen in die Kappe oder Wanne wird das Bauteil unter Aufreißen der Abdeckklappen vom Gasgenerator weg nach hinten verlagert, so dass die Airbagsaustrittöffnung freigegeben wird. Erst bei vollständig freigegebener Airbagaustrittöffnung wird eine Gasverbindung zum Airbag selbst hergestellt, so dass der Airbag ungehindert vor der Airbagaustrittöffnung aufgeblasen werden kann. Eine Möglichkeit, eine out-of-position-Insassenposition zu erkennen, ist mit einem derartigen Aufbau nicht vorgesehen und zudem auch nicht möglich.

Um bei einem komplexen Unfallgeschehen den Fahrzeuginsassen über die Dauer des ersten Fahrzeugaufpralls hinaus auch bei einem Sekundäraufprall schützen zu können, ist in der DE 92 11 421 U1 ein Gassack-Rückhaltesystem mit einem wenigstens zwei Kammern aufweisenden Gassack vorgeschlagen worden, von denen die erste, größere Kammer die zweite umgibt und durch eine Wandung begrenzt ist, deren Material eine größere Gasdurchlässigkeit aufweist als das die zweite Kammer begrenzende Material. Die erste Kammer schützt den Fahrzeuginsassen bei dem Primäraufprall, fällt jedoch anschließend schnell zusammen, während die zweite, innere Kammer so lange gefüllt bleibt, dass sie auch noch bei einem Sekundäraufprall ein schützendes Gaspolster bildet.

Ferner ist in der DE 43 20 147 eine Sicherheitsvorrichtung für einen Fahrzeuginsassen beschrieben, die einen Airbag und eine Einrichtung zum Bewegen des Fahrzeuginsassen von einer out of position in die Rückhalteposition vor der vollen Aktivierung des Airbags aufweist. Diese Einrichtung kann mit einem in Richtung auf die Rückhalteposition bewegbaren und vorzugsweise gepolsterten Teil oder einem sog. Positions-Airbag ausgestattet sein.

Aufgabe der Erfindung ist es, eine Airbageinrichtung mit wenigstens einem Airbag als Rückhaltemittel zu schaffen, bei der auf einfache und funktionssichere Weise eine Anpassung des Airbagaufblasverhaltens an eine Insassensitzposition möglich ist, um die Gefahr einer Insassenbeeinträchtigung insbesondere bei sich out-of-position befindlichen Fahrzeuginsassen zu verringern.

Diese Aufgabe wird gelöst mit den Merkmalen des Anspruchs 1. Vorteilhafte Ausgestaltungen sind in den Unteransprüchen dargestellt.

Gemäß Anspruch 1 ist der Gasgenerator im nichtaktivierten Zustand der Airbageinrichtung mit einer ein Tastelement als Erkennungsmittel aufweisenden oder ausbildenden Hülse umgeben, die Ausblasöffnungen des Gasgenerators überdeckt dergestalt, dass bei einer Aktivierung der Airbageinrichtung der Gasgenerator über die Ausblasöffnungen einen Gasstrom in die Hülse einbläst, so dass das Tastelement in Richtung Airbagentfaltungszone als keep-out-zone vorschiebbar ist. Dadurch wird erreicht, dass die Ausblasöffnungen des Gasgenerators ohne Auftreffen des Rastelements auf ein Hindernis in der Airbagentfaltungszone von der Hülse vollständig freigegeben werden zum ungehinderten Aufblasen des Airbags in der Entfaltungszone mit vollem Gasmengenstrom. Beim Auftreffen des Tastelements auf ein Hindernis in der Airbagentfaltungszone wird die Hülse abgebremst, so dass die Ausblasöffnungen von der Hülse in Abhängigkeit vom zurückgelegten Tastweg nicht oder nur zum Teil freigegeben werden, wodurch der Gasstrom in den Airbag unterbunden oder verzögert werden kann.

Das Tastelement ist somit durch freigesetztes Gas aktivierbar und so angeordnet, dass es bis zu einer vorbestimmten Grenze in die Airbagentfaltungszone vordringt, dabei eine an diesem anliegende Partie des nicht entfalteten Airbags mitnehmend. In Abhängigkeit vom Tastweg in der Airbagentfaltungszone steuert das Tastelement somit in Wirkverbindung mit dem Gasgenerator die Entfaltung des Airbags, indem bei Auftreffen auf ein im Tastweg befindliches Hindernis das weitere Vordringen des Tastelementes behindert und dadurch der Gasstrom in den Airbag unterbunden oder stark reduziert wird. Das heißt, dass bei Präsenz einer Person in der Airbagentfaltungszone bzw. bei Vorhandensein eines Hindernisses in dieser, die Entfaltung des Airbags verhindert oder zumindest stark verzögert wird. Wenn das Tastelement unbehindert bis an seine vorbestimmte Grenze vordringen kann, wird auch der Weg für den freigesetzten Gasmassenstrom in den Airbag völlig freigegeben, und der Airbag wird zweckentsprechend entfaltet. Mit dieser einfachen mechanischen Steuerung des Gasmassenstromes in den Airbag nach einer Aktivierung des Systems wird die Aggressivität des Airbags erheblich reduziert, wodurch auch die Gefahr für sich out-of-position befindliche Fahrzeuginsassen erheblich verringert wird. Ein weiterer besonderer Vorteil liegt darin, dass die Hülse als mechanisches Bauteil insgesamt nur wenig störanfällig ist und zudem auch eine besonders einfache und schnelle Anpassung des erforderlichen Gasmengenstroms an die jeweiligen Verhältnisse ermöglicht, wobei dieser Aufbau insgesamt auch sehr funktionssicher ist. Zudem ist ein derartiger Aufbau auch relativ preiswert herstellbar.

Der Airbag kann dabei das Tastelement vollständig einschließen, derart, dass er sowohl im nichtaktivierten Zustand als auch bei einer Aktivierung des Systems während des Vordringens des Tastelementes in die Airbagentfaltungszone fahrgastzellenseitig an diesem anliegt.

Der Gasgenerator mit seinem Diffusor ist zweckmäßigerweise im wesentlichen in Fahrzeuglängsrichtung angeordnet und kann von einer Schiebehülse als Hülse umgeben sein, die fahrgastraumseitig geschlossen und somit durch freigesetztes Gas in Richtung des Fahrgastraumes beaufschlagbar und bewegbar ist. An dieser Schiebehülse ist das Tastelement angeordnet oder ausgebildet. Sie bestimmt in Abhängigkeit von ihrer Stellung am Gasgenerator und damit am Diffusor die pro Zeiteinheit freigesetzte Gasmenge. Ihr Verschiebeweg kann in einfacher Weise durch einen Anschlag begrenzt sein. Dieser kann auch als elektrischer Kontakt zur Zündung einer gegebenenfalls vorgesehenen zweiten Generatorstufe ausgebildet sein. Alternativ dazu kann er aber auch als elektrischer Signalgeber für einen Algorithmus verwendet werden, bei dem z.B. das Δt zwischen einem ersten und diesem Kontakt zur Auslösung der zweiten Generatorstufe berücksichtigt wird.

Das Tastelement selbst kann als Tastpolster ausgebildet sein, das in seiner Ruhe-/Nichtgebrauchsstellung in der Abdeckung der Schalttafel integriert ist und das, ähnlich einem Puffer, bei einer Aktivierung des Systems in die Airbagentfaltungszone vordringt. Das Tastelement kann aber auch ein Tastbag sein, der über die Schiebehülse aktivierbar ist und wiederum diese durch die Gasbeaufschlagung in Richtung der Airbagentfaltungszone verschiebt. Auf einfache Weise ist dieser Tastbag mit Haltebändern versehen, die an der Verschiebehülse oder an einem festen Widerlager angreifen, um seine Ausdehnung zu begrenzen. Beispielsweise ist ein solches Halteband mit dem Anschlag für die Verschiebehülse verbunden. Das Tastpolster oder auch der Tastbag können bei einem Sekundäraufprall als Rückhaltemittel ausgebildet sein, wobei die Schiebehülse zum Zwecke einer Energieabsorption ein Deformationselement ist.

Bei einer bevorzugten Ausführungsform der Airbageinrichtung ist der Gasgenerator von einem Gehäuse umgeben, in dem die das Tastelement tragende Schiebehülse angeordnet ist und fahrgastraumseitig mit einer gasgeneratorseitig am Airbag ausgebildeten Ausgleichskammer verbunden ist, die über Gasdurchtrittsöffnungen und/oder Ventile mit dem Airbag verbunden und gleichzeitig mit diesem aktivierbar ist. Dabei wird die Ausgleichskammer durch freigesetztes Gas aus dem dem Fahrgastraum abgewandten Bereich des Gasgenerators befüllt und die Schiebehülse durch aus der fahrgastraumseitigen Stirnseite desselben. Die Ausgleichskammer als Teil des Airbag wird in radialer Richtung zum Gasgenerator und zum Tastelement entfaltet, und der Airbag im weiteren Entfaltungsablauf. Trifft das Tastelement auf ein Hindernis in der Airbagentfaltungszone und ist dadurch der Tastweg der Schiebehülse verkürzt, werden die Entfaltung der Ausgleichskammer verlangsamt und die Airbagentfaltung verzögert. Letztere kann auch ausbleiben, nämlich dann, wenn Druckventile zwischen der Ausgleichskammer und dem Airbag angeordnet sind und ein diese öffnender Gasdruckstoß ausbleibt.

Ist die Airbagentfaltungszone frei und wird das Tastelement nicht behindert, gibt die Schiebehülse den Diffusor des Gasgenerators ganz frei, und die Ausgleichskammer wird explosionsartig radial zum Insassen befüllt und durch diese auch der Airbag. Die radiale Entfaltung der Ausgleichskammer hat auch den Vorteil, dass gegebenenfalls die Hände eines Fahrzeuginsassen aus der Airbagentfaltungszone gestoßen werden, die nicht im Tastweg befindlich sind. ist die Ausgleichskammer aus einem elastischen Material oder zum Teil aus einem solchen gefertigt, wird dieses bei der Befüllung gedehnt. Das "vorgespannte" Material gibt dann seine gespeicherte Energie bei der Befüllung des Airbags wieder ab und beschleunigt so dessen Entfaltung. Vorteilhaft bei dieser Ausführung ist auch, dass die befüllte Ausgleichskammer als Rückhaltemittel für eine mögliche zweite Kollision dient.

Ist das Tasteiement ein Tastbag, kann dieser ebenfalls, also zusätzlich zum Gasgenerator, mit der Ausgleichskammer über Gasdurchtrittsöffnungen und/ oder Ventile verbunden sein, wodurch die Befüllung der Ausgleichskammer beschleunigt wird. Auch kann der Tastbag zusätzlich oder ausschließlich mit dem Airbag über Ventile direkt verbunden sein, die einen Gasstrom in diesen erst bei Überschreitung eines vorbestimmten Gasdruckes ermöglichen. Durch diese Maßnahme wird nach einer anfänglichen Verzögerung der Airbagentfaltung infolge eines geringeren Gasmassenstromes (Hindernis in der Airbagentfaltungszone) die Airbagentfaltung infolge des aufgebauten Gasüberdruckes nachfolgend unterstützt. Bei der vorbeschriebenen bevorzugten Ausführungsform wird die Schiebekraft der Schiebehülse durch den zwischen dieser und dem Diffusor des Gasgenerators gegebenen Spalt und die gasbeaufschlagte Fläche in Axialrichtung beeinflußt und kann vorbestimmt werden.

Bei einer weiteren, sehr vorteilhaften Ausführungsform können das als Tastbag ausgebildete Tastelement und der Airbag über einen konzentrisch zum Gasgenerator entfaltbaren Refillbag aus einem elastischen Material miteinander verbunden sein, wobei die Verbindung zwischen dem Tastbag und dem Refillbag über Überdruckventile und zwischen dem Refillbag und dem Airbag über Gasdurchtrittsöffnungen gegeben ist. Bei einer Aktivierung des Gasgenerators wird, gesteuert beispielsweise durch die vorbeschriebene Schiebehülse, zunächst der Tastbag befüllt, und anschließend bei einem vorbestimmten Überdruck durch entsprechende Überdruckventile der Refillbag und über diesen und die Gasdurchtrittsöffnungen der Airbag. Fällt bei einer Kollision der Fahrzeuginsasse in den entfalteten Airbag, wird ein Teil des Gases aus diesem in den Refillbag zurückgedrängt, was dazu führt, dass sich der Gasdruck in diesem erhöht, sich die Überdruckventile schließen und der Refillbag unter Energieaufnahme ausgedehnt wird. Löst sich der Fahrzeuginsasse wieder vom Airbag, der dadurch entlastet wird, drückt das elastisch aufgeweitete und somit energiegeladene Gewebe unter Energieabgabe einen Teil des Gases in den Airbag zurück, der dadurch wieder befüllt wird und auch bei einer nachfolgenden möglichen Sekundärkollision erneut Schutz bieten kann. Um Gasverluste zu vermeiden, sollte der Airbag aus einem weitestgehend gasundurchlässigen Gewebe gefertigt sein. Zur Insassenschutzverbesserung kann der Tastbag gasgeneratorseitig- und dort auf seiner Innenseite mit einer durch das Treibgas aufschäumbaren Beschichtung versehen sein. Diese bildet nach der Aktivierung des Gasgenerators eine energieabsorbierende Schicht aus, die als weiteres Rückhaltemittel wirken kann. Der Gasgenerator kann bei dieser Ausführung auch als Stufengenerator ausgebildet sein, der nach der ersten Kollision für eine bevorstehende Sekundärkollision weiteres Treibgas in das System speist und den vorbeschriebenen Refillvorgang durch einen zusätzlichen Gasmengenstrom in den Tastbag unterstützt.

in vorteilhafter Weise kann die Airbageinrichtung auch einen Nebenbag aufweisen, der mit dem Gasgenerator über ein Überdruckventil befüllbar ist. Dieser Nebenbag dient der Aufnahme freigesetzten und für die Airbagentfaltung nicht benötigten Gases, das sonst insbesondere in den Fußraum entweichen würde. Das Überdruckventil öffnet sich, wenn das jeweilige Tastelement auf ein Hindernis stößt und in Folge der durch freigesetztes Gas aufgebaute Druck im Gasgenerator den Öffnungsdruck für das Ventil überschreitet.

Alternativ zu dem an einer Schiebehülse angeordneten Tastelement kann das Tastelement auch ein vom Fahrgastraum her über den Gasgenerator bzw. dessen Diffusor gezogener strumpfförmiger und koaxial in Falten gelegter und die Hülse ausbildender Tastbag sein, der von einem separaten Diffusor von im wesentlichen glockenförmiger Gestalt mit nach dem Fahrgastraum weisender Öffnung umgeben ist. Dieser wiederum ist vom Airbag eingeschlossen und weist an der dem Fahrgastraum abgewandten Seite ein Überdruckventil auf. Bei einer Aktivierung des Gasgenerators strömt aus der fahrgastraumseitigen Stirnseite desselben Gas in den Tastbag, der dadurch in Richtung auf die Airbagentfaltungszone vordringt. Stößt er auf ein Hindernis, wird die Freilegung weiterer Diffusoröffnungen am Gasgenerator gestoppt, und das noch gefaltete Tastbaggewebe verbleibt im separaten Diffusor und verschließt dort den Großteil der in diesem ausgebildeten Öffnungen, so dass der um den Diffuser angeordnete Airbag nur mit einem geringen Gasdruck entfaltet wird, und zwar wegen der Glockenform des Diffusors zunächst vorwiegend in radialer Richtung zum Gasgenerator. In der Folge steigt der Gasdruck innerhalb des separaten Diffusors so an, dass sich das Überdruckventil öffnet und das Gas, auch das weiterhin vom Gasgenerator freigesetzte, entweicht.

Das entweichende Gas kann aber vorteilhaft für die Einrichtung genutzt werden. Wenn das Überdruckventil in eine mit dem Airbag verbundene Vorkammer mündet, kann das Gas über diese Vorkammer und mit Verzögerung zur Entfaltung des Airbags genutzt werden, so dass dieser gewollt verzögert und damit weniger aggressiv entfaltet wird.

Auch kann der separate Diffusor in seinem dem Fahrgastraum abgewandten Bereich mit einer am Airbag vorgesehenen Nebenkammer verbunden sein, die in Wirkverbindung mit einer schwenkbaren Abdeckklappe steht und zwischen dem Diffusor und der Schwenkhalterung derselben zusammengefaltet angeordnet ist. Bei einer Aktivierung des Gasgenerators wird sofort auch die Nebenkammer befüllt und löst eine Schwenkbewegung der Abdeckklappe aus, so dass das Tastelement in die Airbagentfaltungszone stoßen kann. Die Klappe ist vorzugsweise in Richtung ihrer Schließstellung vorgespannt, beispielsweise federkraftbeaufschlagt, damit zwischen der geöffneten Abdeckklappe und dem separaten Diffusor eine Gasdurchströmöffnung zum Airbag gebildet wird, deren Größe von der Befüllung der Nebenkammer abhängig ist. Befindet sich ein Hindernis in der Airbagentfaltungszone, bleibt der Gasstrom in die Nebenkammer reduziert, und die Gasdurchströmöffnung bleibt geschlossen oder ist klein, so dass der Airbag nicht oder nur langsam befüllt wird. Stößt das Tastelement nicht auf ein Hindernis, wird die Nebenkammer mit großem Gasdruck befüllt, und die Gasdurchströmöffnung wird weit geöffnet, so dass auch der Airbag nachfolgend zügig befüllt und wegen der Glockenform des separaten Diffusors zunächst vorwiegend in radialer Richtung und nachfolgend erst in axialer Richtung entfaltet wird.

Schließlich kann die Airbageinrichtung sowohl eine Nebenkammer als auch eine Vorkammer aufweisen, die miteinander verbunden sind.

Durch die Anordnung der Nebenkammer, auch der Vorkammer, in Verbindung mit einer federkraftbeaufschlagten (vorgespannten) Abdeckklappe wird auch eine Refillfunktion erfüllt. Wird der Fahrzeuginsasse durch den entfalteten Airbag zurückgehalten, drückt er das Gas über die Gasdurchströmöffnung in die Nebenkammer, gegebenenfalls auch über die Vorkammer, zurück, wobei sich die Gasdurchströmöffnung weitet. Bei einer zweiten Kollision steht diese zurückgedrängte Gasmenge momentan zur Verfügung, wobei die Nebenkammer als Puffer dient, um den Airbag möglichst weich aufzublasen. Wenn ein Mehrstufengenerator in die Airbageinrichtung eingesetzt ist, wird bei einer zweiten Kollision eine weitere Stufe desselben gezündet, ausgelöst durch ein Crashsignal. Dazu kann der Tastbag mit elektrischen Kontakten versehen sein, die durch Kontaktfolienstreifen gebildet sind, um die Zündung der zweiten und gegebenenfalls einer weiteren Generatorstufe auszulösen.

Auch kann die Aktivierung des Systems derart erfolgen, dass durch Zünden einer ersten Stufe zunächst die Nebenkammer aufgeblasen und dadurch die Abdeckklappe geöffnet wird. Durch Zünden einer zweiten Stufe wird der Tastbag aktiviert. Wenn ein an diesem ausgebildeter oder angeordneter elektrischer Kontakt geschlossen wird, wird eine dritte Stufe gezündet, die den Airbag entfaltet. Anstelle der Kontakte sind auch andere Maßnahmen vorsehbar, beispielsweise Reißschnüre.

Die Erfindung wird nachstehend anhand von Ausführungsbeispielen erläutert. In den zugehörigen Zeichnungen zeigen schematisch:
- Fig. 1:: eine Airbageinrichtung mit einem Tastbag und einem Nebenbag,
- Fig. 2:: ein Tastpolster,
- Fig. 3:: eine Airbageinrichtung mit einem strumpfförmigen Tastbag.
- Fig. 4:: eine Airbageinrichtung mit einer Ausgleichskammer im Airbag,
- Fig. 5:: eine Airbageinrichtung mit einem Refillbag und
- Fig. 6:: eine weitere Airbageinrichtung mit Refillbag.

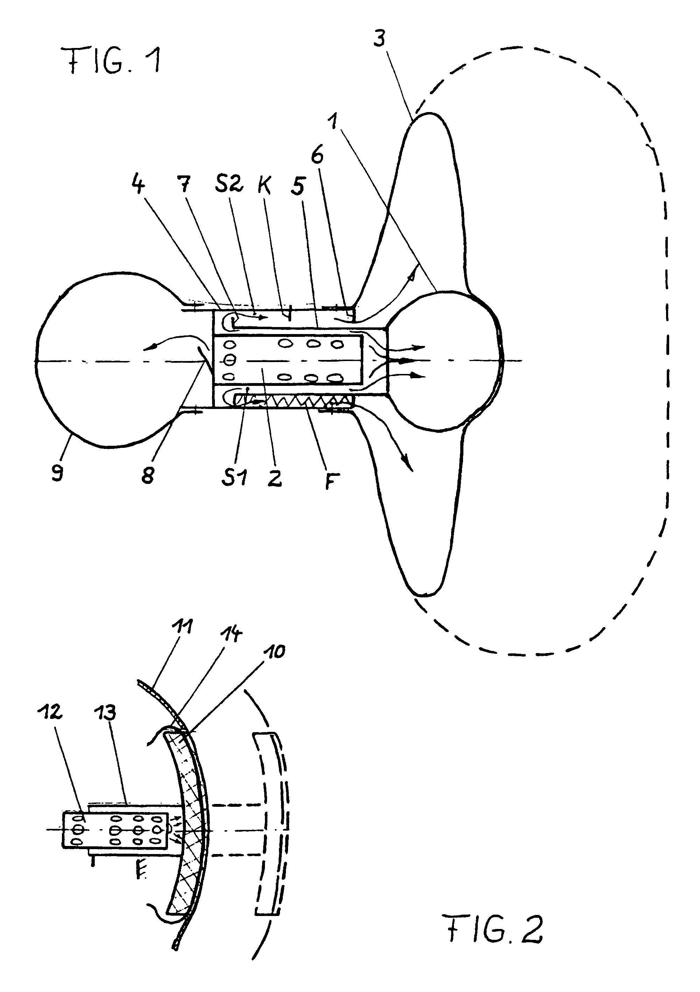

Fig. 1 zeigt eine Airbageinrichtung mit einem als Erkennungsmittel für ein Hindernis in der Airbagentfaltungszone dienenden Tastbag 1, der mit einem in Fahrzeuglängsrichtung angeordneten Gasgenerator 2 (Mehrstufengasgenerator) mit einem Diffusor in Wirkverbindung steht und vom Airbag 3 eingeschlossen ist. Der Airbag 3 ist an einem Gehäuse 4 angeordnet, das den Gasgenerator 2 und eine diese einschließende Schiebehülse 5 umschließt, an der fahrgastraumseitig der Tastbag 1 angeordnet ist. Das Gehäuse weist einen koaxial angeordneten Anschlag 6 für einen an der Schiebehülse 5 auf der dem Tastbag abgewandten Seite ausgebildeten Anschlag 7 zur Begrenzung ihres Schiebeweges und damit des Tastbags 1 in die Airbagentfaltungszone auf. Die Schiebehülse 5 ist gegenüber dem Gehäuse 4 durch eine Druckfeder F vorgespannt. Am Gehäuse 4 ist ein flexibler elektrischer Kontakt K angeordnet, der von einem am Anschlag 7 durch eine Kontaktfolie ausgebildeten zweiten Kontakt kontaktierbar ist, um eine zweite Generatorstufe zu zünden. Zwischen der Schiebehülse 5 und dem Gehäuse 4 ist ein Spalt S1 zum Gasdurchtritt ausgebildet. An der Rückseite des Gasgenerators 2 befindet sich ein Überdruckventil 8, das in einen am Gehäuse 4 angeordneten Nebenbag 9 mündet. Die Airbageinrichtung ist im aktivierten Zustand mit dem auf dem Tastweg gestoppten Tastbag 1 und dem fahrgastseitig an diesem anliegenden Airbag 3 sowie dem entfalteten Nebenbag 9 gezeigt. An der nebenbagseitigen Stimseite des Gehäuses 4 können zusätzlich Ventile angeordnet sein, über die bei einer Kollision des Fahrzeuginsassen mit dem Airbag 3 Gas aus diesem in den Nebenbag 9 strömen kann, das vor einer Nachfolgekollision teilweise wieder zurückströmt und für diese zur Verfügung steht.

Durch die Aktivierung des Gasgenerators 2 ist Gas in den Spalt S2 zwischen der Schiebehülse 5 und dem Gasgenerator 2 freigesetzt worden, das zum einen fahrgastraumseitig den Tastbag 1 aktiviert und diesen (1) mit der Schiebehülse 5 in die Airbagentfaltungszone gedrückt hat und das zum anderen über den Spalt S1 den Airbag 1 in einem Anfangsstadium entfaltet hat. Ist der Tastbag 1 auf ein nicht dargestelltes Hindernis gestoßen, so wird sein weiteres Vordringen verhindert, die Schiebehülse 5 umgibt den Diffusor des Gasgenerators 2 fast noch vollständig, und der Gasdruck ist in diesem (2) gestiegen. Dadurch hat sich das Überdruckventil 8 geöffnet, und der Nebenbag 9 ist befüllt worden (Fig. 1). Der Airbag kann nicht weiter entfaltet werden. Befindet sich nun kein Hindernis im Tastweg, wäre der Nebenbag 9 nicht befüllt worden, und im weiteren Verlauf wird die Schiebehülse durch den Tastbag 1 mit ihrem Anschlag 7 bis zum Anschlag 6 am Gasgenerator 2 verschoben, die zweite Generatorstufe wird beim Passieren des Kontaktes K durch den Anschlag 7 gezündet und der Airbag 1 bei geschlossen gebliebenem Überdruckventil 8 voll entfaltet (gestrichelte Linie).

Der Nebenbag 9 kann auch als Refillairbag für eine Multikollision dienen. Das durch den Fahrzeuginsassen aus dem Airbag 3 verdrängte Gas kann in den Nebenbag 9 ausweichen und nach der Entlastung des Airbags 3 teilweise wieder in diesen zurückströmen. Sind Drosselbohrungen anstelle von Ventilen angeordnet, kann der Nebenbag 9 als zusätzlicher Puffer dienen, wenn sich ein Hindernis in der keep out Zone befindet.

In Fig. 2 ist ein als Tastpolster 10 ausgebildetes Tastelement dargestellt, das in die Abdeckung 11 für den Airbag in der Armaturentafel integriert ist. Das Tastpolster 10 ist, wie der Tastbag in Fig. 1, mit einer am Gasgenerator 12 angeordneten Schiebehülse 13 verbunden und dringt bei einer Aktivierung der nicht weiter dargestellten Airbageinrichtung in die Airbagentfaltungszone vor. Ein angedeuteter Airbag 14 wird durch das Tastpolster 10 mitgeführt und bei Nichtvorhandensein eines Hindernisses voll entfaltet.

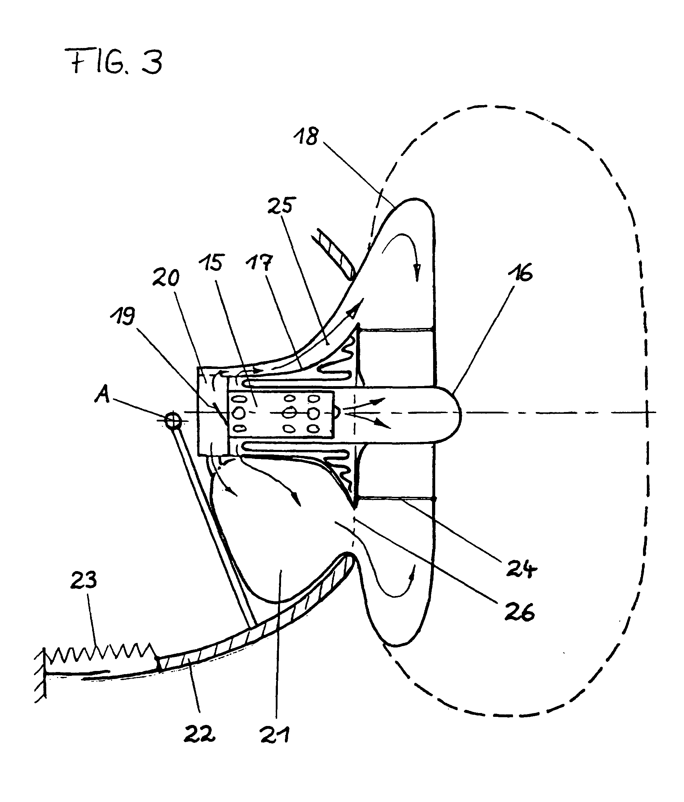

Die in Fig. 3 gezeigte Ausführung weist einen von der Fahrgastraumseite her strumpfförmig auf einen Gasgenerator 15 gezogenen und koaxial in Falten gelegten Tastbag 16 als Tastelement auf. Dieser Tastbag 16 ist von einem glockenförmig gestalteten und mit der Öffnung zum Fahrgastraum angeordneten separaten Diffusor 17 umgeben, der wiederum vom Airbag 18 eingeschlossen ist. Der Diffusor 17 weist an der dem Fahrgastraum abgewandten Seite ein Überdruckventil 19 auf, das in eine Vorkammer 20 mündet. Sowohl der Diffusor 17 in seinem dem Fahrgastraum abgewandten Bereich als auch die Vorkammer 20 sind mit einer am Airbag 18 ausgebildeten Nebenkammer 21 verbunden. Diese (21) steht mit einer um eine quer zur Fahrzeuglängsachse angeordnete Achse A schwenkbaren Abdeckklappe 22 in Wirkverbindung, die durch eine Druckfeder 23 in Richtung ihrer Schließstellung beaufschlagt ist. Der Airbag 18 ist mit Reißbändern 24 versehen und über einen Spalt 25 mit dem Diffusor 17 und dem Gasgenerator 15 verbunden.

Bei einer Aktivierung des Gasgenerators 15 strömt aus dem dem Fahrgastraum abgewandten Bereich des Gasgenerators 15 freigesetztes Gas in die Nebenkammer 21, die in Folge durch ihre Entfaltung die Abdeckklappe 21 gegen die Druckfeder 23 um die Achse A schwenkt und öffnet. Gleichzeitig strömt aus der fahrgastraumseitigen Stirnseite des Gasgenerators 15 Gas in den Tastbag 16, der dadurch in Richtung auf die Airbagentfaltungszone vordringt. Bei einer Kollision mit einem Hindernis wird das Vordringen des Tastbags 16 und damit die weitere Freilegung des Diffusors am Gasgenerator 15 gestoppt. Der Gasstrom in die Nebenkammer 21 und auch über den Spalt 25 in den Airbag 18 bleibt reduziert. Die zwischen der Nebenkammer 21 und dem Airbag 18 gegebene Gasdurchströmöffnung 26 bleibt geschlossen oder ist klein, so dass der Airbag 18 nicht oder nur langsam befüllt wird. Diesen Zustand zeigt Fig. 3. Stößt der Tastbag 16 nicht auf ein Hindernis, werden der Diffusor des Gasgenerators 15 völlig freigegeben und die Nebenkammer 21 mit großem Gasdruck befüllt. Dadurch wird die Gasdurchströmöffnung 26 weit geöffnet, so dass auch der Airbag 18 nachfolgend zügig befüllt und die gestrichelt angedeutete Form annimmt. Der glockenförmige Diffusor sorgt für einen vorwiegend radialen Gasstrom bei der Befüllung des Airbags 18.

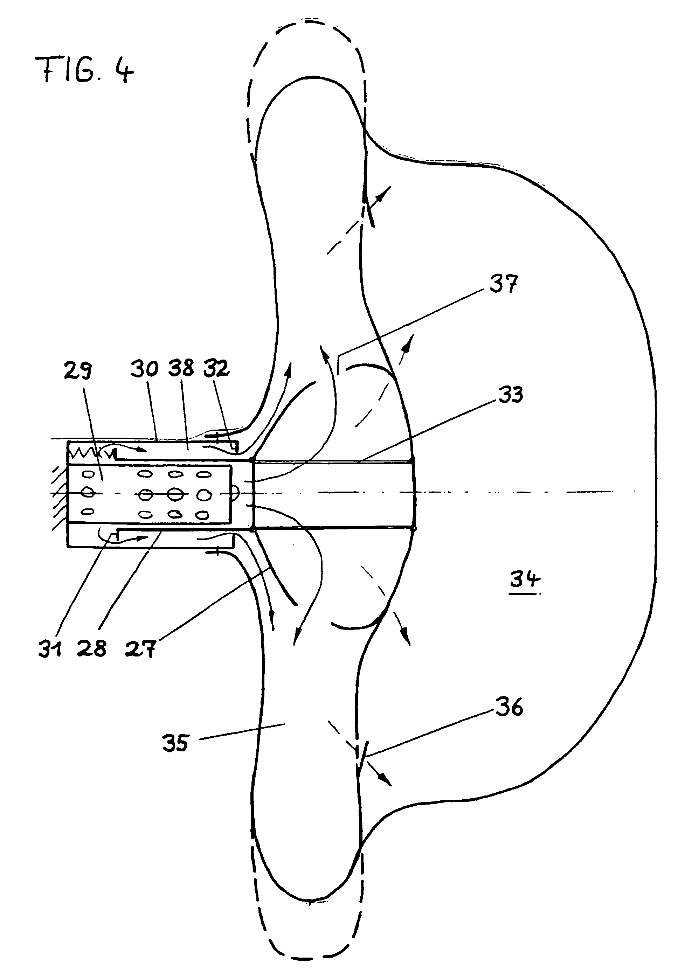

In Fig. 4 ist die Ausführung einer erfindungsgemäßen Airbageinrichtung gezeigt, die einen über eine Schiebehülse 28 mit einem Gasgenerator 29 zusammenwirkenden Tastbag 27 aufweist. Die Schiebehülse 28 ist von einem Gehäuse 30 umschlossen. Beide (28, 30) weisen Anschläge 31 und 32 auf, um den Tastweg der Schiebehülse 28 in die Airbagentfaltungszone zu begrenzen. Überdies ist der Tastbag 27 mit Haltebändern 33 versehen, die seine Ausdehnung in Richtung des Fahrgastraumes begrenzen. Der den Tastbag 27 einschließende Airbag 34 weist gasgeneratorseitig eine Ausgleichskammer 35 auf, über die der Airbag 34 am Gehäuse 30 angeordnet ist und die über Ventile 36 mit dem Airbag 34 und über Gasdurchtrittsöffnungen 37 mit dem Tastbag 27 verbunden ist. Die zum Teil aus einem elastischen Gewebe bestehende Ausgleichskammer 35 ist über einen zwischen dem Gehäuse 30 und der Schiebehülse 28 gebildeten Spalt 38 und auch über die Gasdurchtrittsöffnungen 37 mit radialem Gasstrom befüllbar und kann bei ausreichendem Gasdruck Energie speichern (gestrichelte Linien).

Befindet sich ein Hindernis in der Airbagentfaltungszone, wird, nach dem Prinzip der vorbeschriebenen Ausführungen, zunächst nur die Ausgleichskammer 35 in radialer Richtung und mit geringem Gasmassenstrom entfaltet (Pfeile). Der Airbag 34 wird nur entfaltet, wenn der Gasdruck in der Ausgleichskammer 35 so hoch ist, dass sich die Überdruckventile 36 öffnen. Bei Nichtvorhandensein eines Hindernisses in der genannten Zone gibt die Schiebehülse 28 den Diffusor des Gasgenerators völlig frei. Die Ausgleichskammer 35 wird fast gleichzeitig mit dem Tastbag 27 explosionsartig gefüllt und durch diese und die Ventile 36 auch der Airbag 34, wobei die gedehnten elastischen Bereiche der Ausgleichskammer 35 die Befüllung des Airbags 34 unterstützen, indem sie nach Öffnung der Ventile 36 in diesen befindliches Gas verdrängen. Fig. 4 zeigt den voll entfalteten Airbag 34. Die radiale Entfaltung der Ausgleichskammer 35 kann bei einem frontalen Schrägaufprall schutzverbessernd wirken, da der Rückhaltebereich bei dieser Ausführung in radialer Richtung vergrößert ist und der Fahrzeuginsasse bei einem Schrägaufprall abweichend von der axialen Richtung auf den Airbag 34 stößt und von dem äußeren Bereich der Ausgleichskammer 35 aufgefangen wird. Auch für eine Nachfolgekollision ist bei dieser Ausführung noch ein Schutzpotential gegeben. Der Fahrzeuginsasse drückt bei einer ersten Kollision Gas aus dem Airbag 34 über die Ventile 36 in die Ausgleichskammer 35 zurück. Diese dehnt sich aus. Das in der Ausgleichskammer 35 verbleibende Gas steht dann teilweise für eine Nachfolgekollision zur Verfügung, indem eine Teilmenge desselben in den Airbag 34 zurückgedrückt wird. Durch das Zünden einer zweiten Generatorstufe infolge eines Crashsignais bei einer zweiten Kollision kann die Rückhaltefunktion zusätzlich gezielt beeinflußt werden.

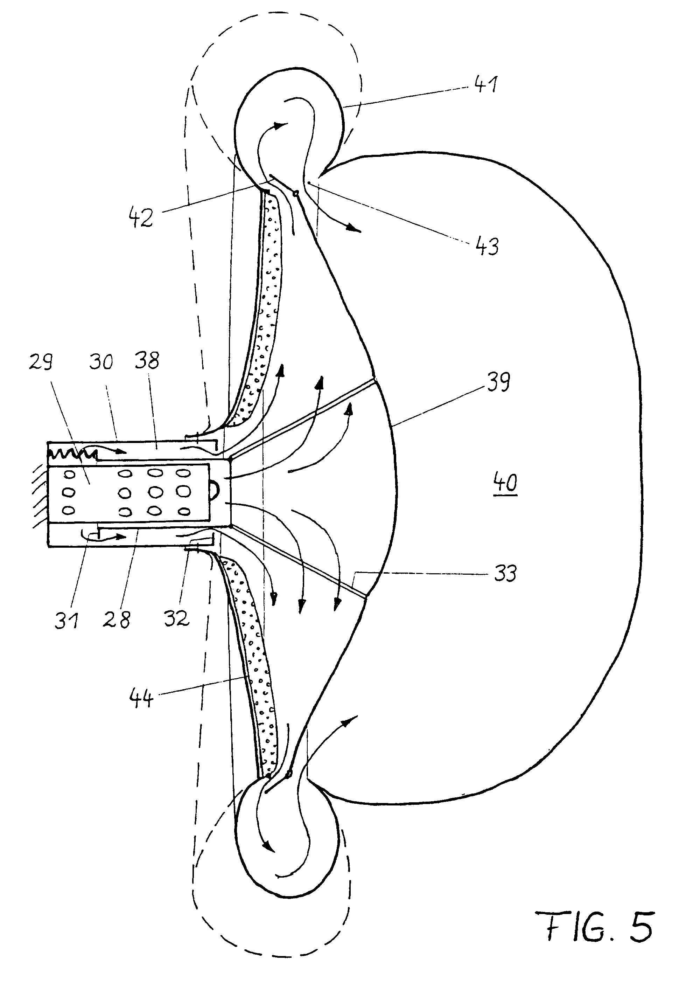

In Fig. 5 ist eine Ausführung gezeigt, die einen Tastbag 39 aufweist, der über eine durch eine Zugfeder vorgespannte Schiebehülse 28 mit einem Gasgenerator 29 zusammenwirkt. Die Schiebehülse 28 ist von einem Gehäuse 30 umschlossen, an dem der Tastbag 39 und, diesem fahrgastzellenseitig nachgeordnet, ein Airbag 40 aus einem luftundurchlässigen Material angeordnet sind, um Gasverluste weitestgehend zu vermeiden. Die Schiebehülse 28 und das Gehäuse 30 weisen Anschläge 31 und 32 auf, um den Tastweg der Schiebehülse 28 in die Airbagentfaltungszone zu begrenzen. Überdies ist der Tastbag 39 mit an der Schiebehülse 28 befestigten Haltebändern 33 versehen, die seine Ausdehnung in Richtung des Fahrgastraumes begrenzen, und weist gasgenerator- und innenseitig eine durch das Treibgas aufschäumbare Beschichtung 44 auf. Der Tastbag 39 und der Airbag 40 sind über einen konzentrisch zum Gasgenerator 29 entfaltbaren Refillbag 41 aus einem elastischen luftundurchlässigen Material verbunden, wobei die Verbindung zwischen dem Tastbag 39 und dem Refillbag 41 über Überdruckventile 42 und zwischen dem Refillbag 41 und dem Airbag 40 über Gasdurchtrittsöffnungen 43 gegeben ist.

Der Tastbag 39 ist über einen zwischen dem Gehäuse 30 und der Schiebehülse 28 gebildeten Spalt 38 durch am Umfang des Gasgenerators 29 freigesetztes Gas und auch durch stirnseitig aus diesem (29) freigesetztes Gas befüllbar, insbesondere in radialer Richtung. Bei ausreichendem Gasdruck im Tastbag 39, also dann, wenn kein Hindernis mehr in der Airbagentfaltungszone befindlich ist, werden nacheinander der Refillbag 41 über die Überdruckventile 42 und der Airbag 40 über die Gasdurchtrittsöffnungen 43 befüllt. Bei einer Befüllung des Tastbags 39 strömt Treibgas über die Beschichtung 44, die dadurch nach und nach zu einer energieabsorbierenden Schicht aufgeschäumt wird und bei einem Sekundäraufprall als zusätzliches Rückhaltemittel zur Verfügung steht.

Wird nun der Fahrzeuginsasse bei einer Primärkollision in den entfalteten Airbag 40 gedrückt, entsteht in diesem ein Überdruck, durch den Gas über die Gasdurchtrittsöffnungen 43 in den Refillbag 41 gedrückt wird, der sich in Folge bei geschlossenen Überdruckventilen 42 energiespeichernd elastisch ausdehnt (gestrichelt dargestellt). In der sich anschließenden Phase, in der sich der Fahrzeuginsasse vom Airbag 40 wieder löst, wird dieser entlastet. Durch diese Entlastung und die im Gewebe des Refillbags 41 gespeicherte Energie wird ein Teil des im Refillbag 41 gespeicherten Gases aus diesem zurück in den Airbag 40 gedrückt, der dadurch wieder befüllt wird und bei einer Sekundärkollision, die in der Regel weniger heftig erfolgt, erneut als Rückhaltemittel zur Verfügung steht.

Bei einer weiteren, nicht dargestellten Ausführung ist die Verbindung zwischen dem Tastbag 39 und dem Refillbag 41 durch die Anordnung weiterer Überdruckventile, die bei einem im Refillbag 41 gegebenen vorbestimmten Überdruck in Richtung des Tastbags 39 öffnen, so gestaltet, dass bei einer Sekundär- oder Multikollision auch der Tastbag 39 aus dem Refillbag 41 nachgefüllt wird und zusätzlich zum Airbag 40 als Rückhaltemittel dient. Bei entsprechender Gestaltung des Gasdurchtritts zwischen dem Refillbag 41 und dem Airbag 40 unter Einbeziehung der vorstehend beschriebenen Maßnahme kann die Airbageinrichtung auch so ausgeführt sein, dass für eine sekundäroder Multikollision nur der Tastbag 39 als Rückhaltemittel dient.

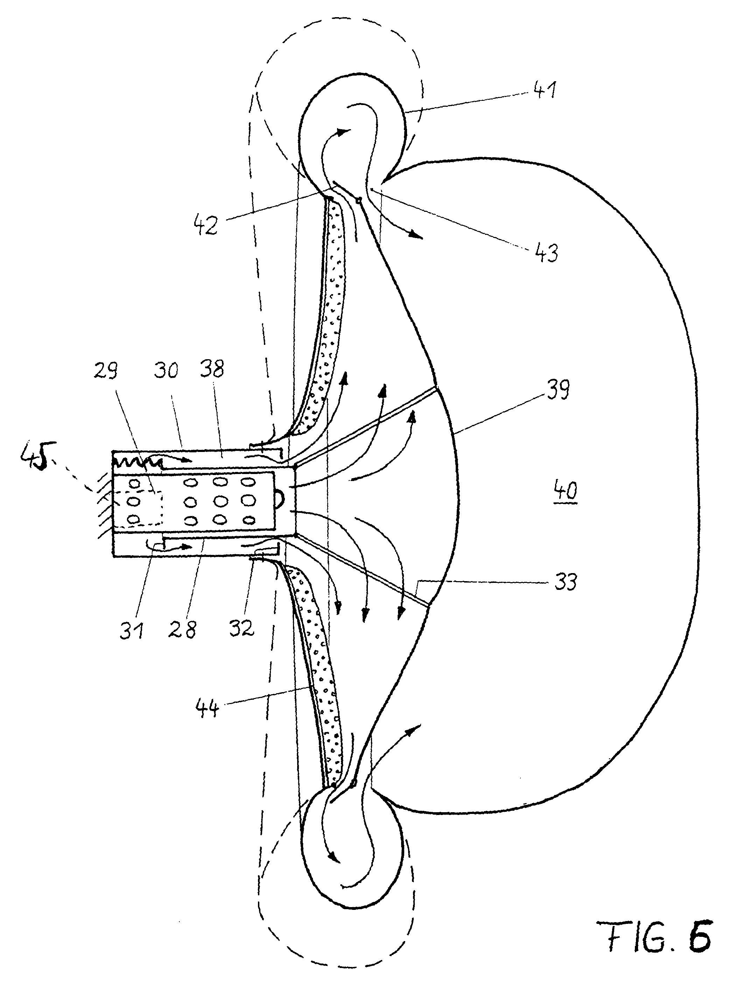

Bevorzugt wird zumindest für die mit elastischen Abschnitten (z. B. Ausgleichskammer 35 in Figur 4 oder Refillbag 41 in Figur 5) versehenen Airbags ein sogenannter Kaltgasgenerator oder Hybridgasgenerator zur Befüllung vorgesehen wie beispielsweise in den Schriften DE 197 00 713, DE 196 21 045, EP 0 449 506, US 5,516,144, EP 0 715 993 oder DE 44 40 247 beschrieben. Die mit derartigen Gasgeneratoren eingefüllten Luftmassen sind so kühl, dass das in der Regel wärmeempfindliche elastische Material (Kautschuk, EPDM oder dergleichen) durch den Gasstrom nicht geschädigt wird und so dem Erschlaffen der Hauptkammer des Airbags 34 durch elastische Selbstrückstellung entgegenwirken kann. Durch erfinderseitige Untersuchungen konnte festgestellt werden, dass dieser Gasmassenrückstrom aus den gedehnten elastischen Bereichen groß genug ist, um die Hauptkammerwandungen gespannt zu halten, so dass für eine Nachfüllung mit Heißgas aus einem zweiten Generator nur noch wenig Gasmasse notwendig ist und damit für Multikollisionsereignisse mit geringem Aufwand und ohne großen Zeitverzug weiterer Aufprallschutz zur Verfügung gestellt wird. Ein solcher Zusatzgenerator 45 (siehe Figur 6) kann mit handelsüblichen Heißgas-Treibsätzen bestückt sein, wie sie beispielsweise in Fahrzeugen der Anmelderin bereits im Einsatz sind. Ebenso ist hier auch der Einsatz von Kaltgasgeneratoren möglich.

### BEZUGSZEICHENLISTE

- 1: Tastbag
- 2: Gasgenerator
- 3: Airbag
- 4: Gehäuse
- 5: Schiebehülse
- 6: Anschlag
- 7: Anschlag
- 8: Überdruckventil
- 9: Nebenbag
- 10: Tastpolster
- 11: Abdeckung
- 12: Gasgenerator
- 13: Schiebehülse
- 14: Airbag
- 15: Gasgenerator
- 16: Tastbag
- 17: Diffuser
- 18: Airbag
- 19: Überdruckventil
- 20: Vorkammer
- 21: Nebenkammer
- 22: Abdeckklappe
- 23: Druckfeder
- 24: Reißband
- 25: Spalt
- 26: Gasdurchströmöffnung
- 27: Tastbag
- 28: Schiebehülse
- 29: Gasgenerator
- 30: Gehäuse
- 31: Anschlag
- 32: Anschlag
- 33: Halteband
- 34: Airbag
- 35: Ausgleichskammer
- 36: Ventil
- 37: Gasdurchtrittsöffnung
- 38: Spalt
- 39: Tastbag
- 40: Airbag
- 41: Refillbag
- 42: Überdruckventil
- 43: Gasdurchtrittsöfnungen
- 44: Beschichtung
- 45: Zusatzgasgenerator
- A: Achse
- F: Druckfeder
- S1: Spalt
- S2: Spalt
- K: Kontakt

## Patentansprüche

1. Airbageinrichtung für ein Kraftfahrzeug mit einem hinter einer Verkleidung, insbesondere hinter einer im Bereich der Armaturentafel ausgebildeten Abdeckung, zusammengefaltet angeordneten und durch einen Gasgenerator aufblasbaren Airbag, wobei die Verkleidung im Falle einer Airbag-Auslösung eine Öffnung zur Entfaltung desselben in eine Rückhaltestellung für den Fahrzeuginsassen freigibt, mit einer Auslösesensorik und einem Erkennungsmittel für ein Hindernis in der Airbagentfaltungszone,
**dadurch gekennzeichnet,**
**dass** der Gasgenerator (2, 12, 15, 29) im nicht aktivierten Zustand der Airbageinrichtung mit einer ein Tastelement (1, 10, 16, 27, 39) als Erkennungsmittel aufweisenden oder ausbildenden Hülse (5, 13, 16, 28) umgeben ist, die Ausblasöffnungen des Gasgenerators (2, 12, 15, 29) überdeckt dergestalt,
**dass** bei einer Aktivierung der Airbageinrichtung der Gasgenerator (2, 12, 15, 29) über die Ausblasöffnungen einen Gasstrom in die das Tastelement (1, 10, 16, 27, 39) aufweisende oder ausbildende Hülse (5, 13, 16, 28) einbläst, so dass das Tastelement (1, 10, 16, 27, 39) in Richtung Airbagentfaltungszone als keep-out-zone vorschiebbar ist dergestalt,
**dass** die Ausblasöffnungen des Gasgenerators (2, 12, 15, 29) ohne Auftreffen des Tastelements (1, 10, 16, 27, 39) auf ein Hindernis in der Airbagentfaltungszone von der Hülse (5, 13, 16, 28) vollständig freigebbar sind zum ungehinderten Aufblasen des Airbags (3, 14, 18, 34, 40) in der Airbagentfaltungszone mit vollem Gasmengenstrom, und
**dass** die Hülse (5, 13, 16, 28) beim Auftreffen des Tastelements (1, 10, 16, 27, 39) auf ein Hindernis in der Airbagentfaltungszone abbremsbar ist, so dass die Ausblasöffnungen von der Hülse (5, 13, 16, 28) in Abhängigkeit vom zurückgelegten Tastweg nicht oder nur zum Teil freigegeben sind und dadurch der Gasstrom in den Airbag (3, 14, 18, 34, 40) unterbunden oder verzögert wird.

2. Airbageinrichtung nach Anspruch 1, **dadurch gekennzeichnet, dass** der das Tastelement (1, 10, 16, 27, 39) einschließende Airbag (3, 14, 18, 34, 40) während des Vordringens des Tastelementes (1, 10, 16, 27, 39) in die Airbagentfaltungszone fahrgastraumseitig an diesem anliegt.

3. Airbageinrichtung nach Anspruch 1 oder 2, **dadurch gekennzeichnet, dass** der Gasgenerator (2, 12, 29) im wesentlichen in Fahrzeuglängsrichtung angeordnet und von einer fahrgastraumseitig geschlossenen und durch freigesetztes Gas beaufschlagten Schiebehülse (5, 13, 28) als Hülse umgeben ist, an der das Tastelement (1, 10, 27) angeordnet oder ausgebildet ist und die in Abhängigkeit von ihrer Stellung über dem Gasgenerator (2, 12, 29) die pro Zeiteinheit freigesetzte Gasmenge bestimmt.

4. Airbageinrichtung nach Anspruch 3, **dadurch gekennzeichnet, dass** der Verschiebeweg der Schiebehülse (5, 13, 28) durch einen Anschlag (6/7, 31/32) begrenzt ist.

5. Airbageinrichtung nach Anspruch 4, **dadurch gekennzeichnet, dass** der Anschlag (6/7, 31/32) zugleich als elektrischer Kontakt zur Zündung einer zweiten Generatorstufe ausgebildet ist.

6. Airbageinrichtung nach einem der Ansprüche 1 bis 5, **dadurch gekennzeichnet, dass** das Tastelement als Tastpolster (10) ausgebildet ist, das in seiner Ruhe-/Nichtgebrauchsstellung in der Abdeckung (11) der Schalttafel integriert ist.

7. Airbageinrichtung nach einem der Ansprüche 3 bis 5, **dadurch gekennzeichnet, dass** das Tastelement ein über die Schiebehülse (5, 13, 28) beaufschlagbarer Tastbag (1, 16, 27, 39) ist, der im aktivierten Zustand die Schiebehülse (5, 13, 28) in Richtung der Airbagentfaltungszone verschiebt.

8. Airbageinrichtung nach Anspruch 7, **dadurch gekennzeichnet, dass** der Tastbag (27, 39) in Richtung der Airbagentfaltungszone mit Haltebändern (33) versehen ist, die seine Ausdehnung begrenzen.

9. Airbageinrichtung nach einem der Ansprüche 1 bis 8, **dadurch gekennzeichnet, dass** der Airbag (34) gasgeneratorseitig eine Ausgleichskammer (35) aufweist, die über Gasdurchtrittsöffnungen und/ oder Ventile (36) mit dem Airbag (34) verbunden und in radialer Richtung zum Tastelement (27) gleichzeitig mit diesem aktivierbar ist.

10. Airbageinrichtung nach Anspruch 7 und 9, **dadurch gekennzeichnet, dass** der Tastbag (27) mit der Ausgleichskammer (35) über Gasdurchtrittsöffnungen (37) und/ oder Ventile und/ oder mit dem Airbag über Ventiie (36) verbunden ist.

11. Airbageinrichtung nach Anspruch 7 oder 8, **dadurch gekennzeichnet, dass** der Tastbag (39) und der Airbag (40) über einen konzentrisch zum Gasgenerator (29) entfaltbaren Refillbag (41) verbunden sind, und dass die Verbindung zwischen dem Tastbag (39) und dem Refillbag (41) über Ventile (42) und zwischen dem Refillbag (41) und dem Airbag (40) über Gasdurchtrittsöffnungen (43) gegeben ist.

12. Airbageinrichtung nach Anspruch 11, **dadurch gekennzeichnet, dass** der Airbag (40) aus einem weitestgehend gasundurchlässigen Gewebe besteht.

13. Airbageinrichtung nach Anspruch 11 oder Anspruch 12, **dadurch gekennzeichnet, dass** der Tastbag (39) gasgenerator- und dort innenseitig eine durch das Treibgas aufschäumbare Beschichtung (44) aufweist.

14. Airbageinrichtung nach einem der Ansprüche 1 bis 8, **dadurch gekennzeichnet, dass** ein Nebenbag (9) am Gasgenerator (2) angeordnet ist, der über ein Überdruckventil (8) befüllbar ist.

15. Airbageinrichtung nach Anspruch 1 oder 2, **dadurch gekennzeichnet, dass** der Gasgenerator (15) im wesentlichen in Fahrzeuglängsrichtung angeordnet und von der Fahrgastraumseite her mit einem strumpfförmigen, koaxial in Falten gelegten und die Hülse ausbildenden Tastbag (16) als Tastelement überzogen und dieser von einem separaten Diffusor (17) umgeben ist, der wiederum vom Airbag (18) eingeschlossen ist, und dass der Diffusor (17) an der dem Fahrgastraum abgewandten Seite ein Überdruckventil (19) aufweist.

16. Airbageinrichtung nach Anspruch 15, **dadurch gekennzeichnet, dass** das Überdruckventil (19) in eine Vorkammer mündet, die mit dem Airbag (18) verbunden ist.

17. Airbageinrichtung nach Anspruch 15 oder Anspruch 16, **dadurch gekennzeichnet, dass** der separate Diffusor (17) in seinem dem Fahrgastraum abgewandten Bereich mit einer am Airbag (18) ausgebildeten Nebenkammer (21) verbunden ist, die mit einer um eine quer zur Fahrzeuglängsrichtung angeordnete Achse (A) schwenkbaren Abdeckklappe (22) in Wirkverbindung steht.

18. Airbageinrichtung nach Anspruch 17, **dadurch gekennzeichnet, dass** die Abdeckklappe (22) gegen einen Kraftbegrenzer oder eine Druckfeder (23) schwenkbar angeordnet ist.

19. Airbageinrichtung nach Anspruch 15 bis 18, **dadurch gekennzeichnet, dass** der Gasgenerator (15) ein Mehrstufengasgenerator ist, der nacheinander durch Zünden jeweils der nächsten Stufe das Öffnen der Abdeckklappe (22), das Entfalten des Tastbags (16) und die Entfaltung des Airbags (18) veranlaßt, wobei der Tastbag (16) zur Signalisierung der Zündung der für den Airbag (18) vorgesehenen Stufe mit elektrischen Kontakten oder Reißschnüren (24) versehen ist.

20. Airbageinrichtung nach wenigstens einem der Ansprüche 1 bis 19, **dadurch gekennzeichnet, dass** der Gasgenerator (2, 12, 15, 29) ein Kaltgasgenerator oder Hybridgasgenerator ist.

21. Airbageinrichtung nach wenigstens einem der Ansprüche 1 bis 20, **dadurch gekennzeichnet, dass** ein Zusatzgasgenerator (45) vorgesehen ist.

22. Airbageinrichtung nach wenigstens einem der Ansprüche 20 und 21, **dadurch gekennzeichnet, dass** der Gasgenerator ein Kaltgas- oder Hybridgasgenerator ist und der Zusatzgenerator ein Heißgasgenerator ist.

23. Airbageinrichtung nach wenigstens einem der Ansprüche 1 bis 22, **dadurch gekennzeichnet, dass** wenigstens einer der Airbags (3, 14, 18 34, 40) mit einem elastischen Wandungsabschnitt versehen ist und der mit elastischen Wandungsabschnitt versehene Airbag zuerst mit Kaltgas und dann mit Heißgas und/oder Kaltgas beaufschlagbar ist.

## Claims

1. Airbag device for a motor vehicle having an airbag which is arranged folded up behind a trim panel, in particular behind a covering formed in the region of the dashboard, and can be inflated by a gas generator, the trim panel, in the event of the airbag being triggered, releasing an opening for deployment of the said airbag into a restraining position of the vehicle occupant, having a triggering sensor and a recognition means for an obstacle in the airbag deployment zone, **characterized in that** the gas generator (2, 12, 15 29), in the non-activated state of the airbag device, is surrounded by a sleeve (5, 13, 16, 28) which has or forms a touch element (1, 10, 16, 27, 39) as the recognition means and which covers the blow-out openings of the gas generator (2, 12, 15, 29) in such a manner that, when the airbag device is activated, the gas generator (2, 12, 15, 29) blows a flow of gas via the blow-out openings into the sleeve (5, 13, 16, 28), which has or forms the touch element (1, 10, 16, 27, 39), so that the touch element (1, 10, 16, 27, 39) can be advanced in the direction of the airbag deployment zone, as keep-out zone, in such a manner that the blow-out openings of the gas generator (2, 12, 15, 29) can be completely released by the sleeve (5, 13, 16, 28) without the touch element (1, 10, 16, 27, 39) striking against an obstacle in the airbag deployment zone, for the unhindered inflation of the airbag (3, 14, 18, 34, 40) in the airbag deployment zone with a full amount of gas, and **in that** the sleeve (5, 13, 16, 28) can be braked when the touch element (1, 10, 16, 27, 39) strikes against an obstacle in the airbag deployment zone, with the result that the blow-out openings are not or are only partially released by the sleeve (5, 13, 16, 28) as a function of the travel covered by the touch element, and, as a result, the flow of gas into the airbag (3, 14, 18, 34, 40) is suppressed or delayed.

2. Airbag device according to Claim 1, **characterized in that** the airbag (3, 14, 18, 34, 40) which encloses the touch element (1, 10, 16, 27, 39) bears against said touch element (1, 10, 16, 27, 39) while the latter penetrates forwards into the airbag deployment zone in the passenger compartment.

3. Airbag device according to Claim 1 or 2, **characterized in that** the gas generator (2, 12, 29) is arranged essentially in the longitudinal direction of the vehicle and is surrounded by a sliding sleeve (5, 13, 28) as the sleeve, which is closed towards the passenger compartment, is acted upon by released gas and on which the touch element (1, 10, 27) is arranged or formed and which determines, as a function of its position above the gas generator (2, 12, 29), the amount of gas released per unit of time.

4. Airbag device according to Claim 3, **characterized in that** the displacement travel of the sliding sleeve (5, 13, 28) is restricted by a stop (6/7, 31/32).

5. Airbag device according to Claim 4, **characterized in that** the stop (6/7, 31/32) is designed at the same time as an electrical contact for igniting a second generator stage.

6. Airbag device according to one of Claims 1 to 5, **characterized in that** the touch element is designed as a touch pad (10) which is integrated in its rest/inoperative position in the covering (11) of the control panel.

7. Airbag device according to one of Claims 3 to 5, **characterized in that** the touch element is a touch bag (1, 16, 27, 39) which can be acted upon via the sliding sleeve (5, 13, 28) and, in the activated state, displaces the sliding sleeve (5, 13, 28) in the direction of the airbag deployment zone.

8. Airbag device according to Claim 7, **characterized in that** the touch bag (27, 39) is provided in the direction of the airbag deployment zone with retaining straps (33) which restrict its expansion.

9. Airbag device according to one of Claims 1 to 8, **characterized in that** the airbag (34) has, on the gas generator side, an equalizing chamber (35) which is connected to the airbag (34) via gas passage openings and/or valves (36) and can be activated in the radial direction towards the touch element (27) at the same time with the latter.

10. Airbag device according to Claim 7 and 9, **characterized in that** the touch bag (27) is connected to the equalizing chamber (35) via gas passage openings (37) and/or valves and/or is connected to the airbag via valves (36).

11. Airbag device according to Claim 7 or 8, **characterized in that** the touch bag (39) and the airbag (40) are connected via a refill bag (41) which can be deployed concentrically with respect to the gas generator (29), and **in that** the connection between the touch bag (39) and the refill bag (41) is provided via valves (42) and the connection between the refill bag (41) and the airbag (40) is provided via gas passage openings (43).

12. Airbag device according to Claim 11, **characterized in that** the airbag (40) consists of a fabric which is gas-impermeable to the greatest possible extent.

13. Airbag device according to Claim 11 or Claim 12, **characterized in that** the touch bag (39) has, on the gas generator side and on the inside there, a coating (44) which can be foamed on by means of the propellant.

14. Airbag device according to one of Claims 1 to 8, **characterized in that** a secondary bag (9) is arranged on the gas generator (2) and can be filled via a pressure control valve (8).

15. Airbag device according to Claim 1 or 2, **characterized in that** the gas generator (15) is arranged essentially in the longitudinal direction of the vehicle and is covered from the passenger compartment side with a stocking-shaped, coaxially folded touch bag (16), as the touch element, which forms the sleeve, and the said touch bag is surrounded by a separate diffuser (17) which is enclosed in turn by the airbag (18), and **in that** the diffuser (17) has a pressure control valve (19) on the side facing away from the passenger compartment.

16. Airbag device according to Claim 15, **characterized in that** the pressure control valve (19) opens into an antechamber which is connected to the airbag (18).

17. Airbag device according to Claim 15 or Claim 16, **characterized in that** the separate diffuser (17) is connected, in its region facing away from the passenger compartment, to a secondary chamber (21) which is formed on the airbag (18) and is operatively connected to a covering flap (22) which can be pivoted about an axis (A) arranged transversely with respect to the longitudinal direction of the vehicle.

18. Airbag device according to Claim 17, **characterized in that** the covering flap (22) is arranged pivotably against a force limiter or a compression spring (23).

19. Airbag device according to Claims 15 to 18, **characterized in that** the gas generator (15) is a multistage gas generator which, by ignition of the next stage in each case, successively brings about the opening of the covering flap (22), the deployment of the touch bag (16) and the deployment of the airbag (18), the touch bag (16) being provided with electric contacts or tear cords (24) for signalling the ignition of the stage provided for the airbag (18).

20. Airbag device according to at least one of Claims 1 to 19, **characterized in that** the gas generator (2, 12, 15, 29) is a cold gas generator or hybrid gas generator.

21. Airbag device according to at least one of Claims 1 to 20, **characterized in that** an additional gas generator (45) is provided.

22. Airbag device according to at least one of Claims 20 and 21, **characterized in that** the gas generator is a cold gas generator or hybrid gas generator and the additional generator is a hot gas generator.

23. Airbag device according to at least one of Claims 1 to 22, **characterized in that** at least one of the airbags (3, 14, 18, 34, 40) is provided with an elastic wall section and the airbag provided with the elastic wall section can be acted upon first of all by cold gas and then with hot gas and/or cold gas.

## Revendications

1. Dispositif à coussin gonflable de sécurité pour véhicules automobiles, avec un coussin gonflable de sécurité replié qui est disposé derrière un revêtement, en particulier derrière un recouvrement réalisé dans la région du tableau de bord, et apte à être gonflé par un générateur de gaz, le revêtement libérant une ouverture de déploiement du coussin gonflable de sécurité dans une position de retenue des passagers du véhicule au cas où le coussin gonflable de sécurité est déclenché, et avec une sensorique de déclenchement et un moyen de détection d'un obstacle dans la zone de déploiement du coussin gonflable de sécurité,
**caractérisé en ce que**
lorsque le dispositif à coussin gonflable de sécurité n'est pas à l'état activé, le générateur de gaz (2, 12, 15, 29) est entouré par un manchon (5, 13, 16, 28) qui présente ou qui forme un élément de palpage (1, 10, 16, 27, 39) qui sert de moyen de reconnaissance et qui recouvre les ouvertures de sortie du générateur de gaz (2, 12, 15, 29), de telle sorte que
dans le cas d'une activation du dispositif à coussin gonflable de sécurité, le générateur de gaz (2, 12, 15, 29) injecte par les ouvertures de sortie un écoulement de gaz dans le manchon (5, 13, 16, 28) qui présente ou qui forme l'élément de palpage (1, 10, 16, 27, 39), de telle sorte que l'élément de palpage (1, 10, 16, 27, 39) puisse être déplacé en direction de la zone de déploiement du coussin gonflable de sécurité qui sert de zone interdite, de telle sorte que
les ouvertures de sortie du générateur de gaz (2, 12, 15, 29) peuvent être complètement libérées du manchon (5, 13, 16, 28) sans que l'élément de palpage (1, 10, 16, 27, 39) vienne frapper un obstacle présent dans la zone de déploiement du coussin gonflable de sécurité, pour permettre un gonflement sans obstacle du coussin gonflable de sécurité (3, 14, 18, 34, 40) dans la zone de déploiement du coussin gonflable de sécurité avec la totalité du débit de gaz et **en ce que**
lorsque l'élément de palpage (1, 10, 16, 27, 39) vient frapper un obstacle dans la zone de déploiement du coussin gonflable de sécurité, le manchon (5, 13, 16, 28) peut être freiné de telle sorte que les ouvertures de sortie ne soient pas libérées ou ne soient libérées que partiellement du manchon (5, 13, 16, 28) suivant le parcours de palpage parcouru, pour ainsi interrompre ou ralentir l'écoulement de gaz dans le coussin gonflable de sécurité (3, 14, 18, 34, 40).

2. Dispositif à coussin gonflable de sécurité selon la revendication 1, **caractérisé en ce que** le coussin gonflable de sécurité (3, 14, 38, 34, 40) qui entoure l'élément de palpage (1, 10, 16, 27, 39) est placé contre l'élément de palpage (1, 10, 16, 27, 39) pendant la pénétration de cet élément de palpage dans la zone de déploiement du coussin gonflable de sécurité qui est située du côté de l'habitacle.

3. Dispositif à coussin gonflable de sécurité selon la revendication 1 ou 2, **caractérisé en ce que** le générateur de gaz (2, 12, 29) est disposé essentiellement dans le sens de la longueur du véhicule et est entouré par un manchon coulissant (5, 13, 28) qui sert de manchon, qui est fermé du côté de l'habitacle et qui est sollicité par le gaz libéré, l'élément de palpage (1, 10, 27) étant disposé sur ou constitué par le manchon et définissant en fonction de sa position la quantité de gaz libérée par unité de temps par le générateur de gaz (2, 12, 29).

4. Dispositif à coussin gonflable de sécurité selon la revendication 3, **caractérisé en ce que** le parcours de déplacement du manchon coulissant (5, 13, 28) est limité par une butée (6/7, 31/32).

5. Dispositif à coussin gonflable de sécurité selon la revendication 4, **caractérisé en ce que** la butée (6/7, 31/32) est également configurée comme contact électrique pour l'allumage d'un deuxième étage du générateur.

6. Dispositif à coussin gonflable de sécurité selon l'une quelconque des revendications 1 à 5, **caractérisé en ce que** l'élément de palpage est configuré comme coussin de palpage (10) qui est intégré dans le recouvrement (11) du tableau de bord dans sa position de repos ou de non-utilisation.

7. Dispositif à coussin gonflable de sécurité selon l'une quelconque des revendications 3 à 5, **caractérisé en ce que** l'élément de palpage est un coussin de palpage (1, 16, 27, 39) qui peut être actionné par l'intermédiaire du manchon coulissant (5, 13, 28) et qui, lorsque le manchon coulissant (5, 13, 28) est à l'état activé, se déplace en direction de la zone de déploiement du coussin gonflable de sécurité.

8. Dispositif à coussin gonflable de sécurité selon la revendication 7, **caractérisé en ce que** dans la direction de la zone de déploiement du coussin gonflable de sécurité, le coussin de palpage (27, 39) est doté de bandes de retenue (33) qui limitent son déploiement.

9. Dispositif à coussin gonflable de sécurité selon l'une quelconque des revendications 1 à 8, **caractérisé en ce que** le coussin gonflable de sécurité (34) présente du côté du générateur de gaz une chambre de compensation (35) qui est reliée au coussin gonflable de sécurité (34) par des ouvertures de passage de gaz et/ou des soupapes (36) et qui peut être activée en direction radiale vers l'élément de palpage (27) en même temps que ce dernier.

10. Dispositif à coussin gonflable de sécurité selon les revendications 7 et 9, **caractérisé en ce que** le coussin de palpage (27) est relié à la chambre de compensation (35) par des ouvertures de passage de gaz (37) et/ou des soupapes et/ou au coussin gonflable de sécurité par des soupapes (36).

11. Dispositif à coussin gonflable de sécurité selon la revendication 7 ou 8, **caractérisé en ce que** le coussin de palpage (39) et le coussin gonflable de sécurité (40) sont reliés par un coussin de remplissage (41) qui peut être déployé concentriquement par rapport au générateur de gaz (29) et **en ce que** la liaison entre le coussin de palpage (39) et le coussin de remplissage (41) est définie par des soupapes (42) et la liaison entre le coussin de remplissage (41) et le coussin gonflable de sécurité (40) est définie par les ouvertures de passage de gaz (43).

12. Dispositif à coussin gonflable de sécurité selon la revendication 11, **caractérisé en ce que** le coussin gonflable de sécurité (40) est constitué d'un tissu très largement imperméable au gaz.

13. Dispositif à coussin gonflable de sécurité selon la revendication 11 ou la revendication 12, **caractérisé en ce que** du côté du générateur de gaz et du côté intérieur, le coussin de palpage (39) présente un revêtement (44) qui peut être moussé par le gaz propulseur.

14. Dispositif à coussin gonflable de sécurité selon l'une quelconque des revendications 1 à 8, **caractérisé en ce qu'**un coussin supplémentaire (9) est disposé sur le générateur de gaz (2) et peut être rempli par une soupape de surpression (8).

15. Dispositif à coussin gonflable de sécurité selon la revendication 1 ou 2, **caractérisé en ce que** le générateur de gaz (15) est disposé essentiellement dans le sens de la longueur du véhicule, est revêtu du côté de l'habitacle par un coussin de palpage (16) en forme de tronc de cône qui sert d'élément de palpage, qui est disposé en plis coaxiaux et forme le manchon, entouré par un diffuseur (17) séparé qui à son tour est enfermé dans le coussin gonflable de sécurité (18), et **en ce que** du côté non tourné vers l'habitacle, le diffuseur (17) présente une soupape de surpression (19).

16. Dispositif à coussin gonflable de sécurité selon la revendication 15, **caractérisé en ce que** la soupape de surpression (19) débouche dans une préchambre qui est reliée au coussin gonflable de sécurité (18).

17. Dispositif à coussin gonflable de sécurité selon la revendication 15 ou la revendication 16, **caractérisé en ce que** dans sa zone qui n'est pas tournée vers l'habitacle, le diffuseur séparé (17) est relié à une chambre secondaire (21) réalisée sur le coussin gonflable de sécurité (18) et qui est en liaison de travail avec un clapet de recouvrement (22) qui peut pivoter autour d'un axe (A) disposé transversalement par rapport au sens de la longueur du véhicule.

18. Dispositif à coussin gonflable de sécurité selon la revendication 17, **caractérisé en ce que** le clapet de recouvrement (22) est monté à pivotement en opposition à un limiteur de force ou un ressort de poussée (23).

19. Dispositif à coussin gonflable de sécurité selon les revendications 15 à 18, **caractérisé en ce que** le générateur de gaz (15) est un générateur de gaz à plusieurs étages qui libère successivement, chaque fois par allumage de l'étage suivant, l'ouverture du clapet de recouvrement (22), le déploiement du coussin de palpage (16) et le déploiement du coussin gonflable de sécurité (18), le coussin de palpage (16) étant doté de contacts électriques ou de cordons déchirables (24) pour signaler l'allumage de l'étage prévu pour le coussin gonflable de sécurité (18).

20. Dispositif à coussin gonflable de sécurité selon au moins l'une quelconque des revendications 1 à 19, **caractérisé en ce que** le générateur de gaz (2, 12, 15, 29) est un générateur de gaz froid ou un générateur de gaz hybride.

21. Dispositif à coussin gonflable de sécurité selon au moins l'une quelconque des revendications 1 à 20, **caractérisé en ce qu'**un générateur de gaz supplémentaire (45) est prévu.

22. Dispositif à coussin gonflable de sécurité selon au moins l'une quelconque des revendications 20 et 21, **caractérisé en ce que** le générateur de gaz est un générateur de gaz froid ou un générateur de gaz hybride et **en ce que** le générateur supplémentaire est un générateur de gaz chaud.

23. Dispositif à coussin gonflable de sécurité selon au moins l'une quelconque des revendications 1 à 22, **caractérisé en ce qu'**au moins l'un des coussins gonflables de sécurité (3, 14, 18, 34, 40) est doté d'une partie de paroi élastique, le coussin gonflable de sécurité doté de la partie de paroi élastique pouvant d'abord être alimenté en gaz froid et ensuite en gaz chaud et/ou en gaz froid.
